# EUROPÄISCHE PATENTSCHRIFT

(11) **EP 2 992 247 B1**
(45) Veröffentlichungstag und Bekanntmachung des Hinweises auf die Patenterteilung: **30.10.2019**
(21) Anmeldenummer: 13731278.1
(22) Anmeldetag: 30.04.2013
(51) Int. Cl.: F16H 55/30, F16H 57/00

(54) **KETTENANTRIEB FÜR GLIEDERKETTEN VON BERGBAUFÖRDERERN ODER BERGBAUGEWINNUNGSMASCHINEN**
CHAIN DRIVE FOR LINK CHAINS OF MINING CONVEYORS OR MINING EXTRACTION MACHINES
ENTRAÎNEMENT DE CHAÎNE POUR CHAÎNES À MAILLONS DE CONVOYEURS OU D'ENGINS D'EXPLOITATION MINIÈRE

(43) Veröffentlichungstag der Anmeldung: 09.03.2016
(73) Patentinhaber: Halbach & Braun Maschinenfabrik GmbH + Co., 45527 Hattingen (DE)
(72) Erfinder: BRAUN, Dietrich, 45259 Essen (DE); BRAUN, Eberhard, 45259 Essen (DE)
(74) Vertreter: Griepenstroh, Jörg
(86) Internationale Anmeldenummer: PCT/DE2013/100159
(87) Internationale Veröffentlichungsnummer: WO 2014/177122

(56) Entgegenhaltungen:
- EP-A1- 0 172 922
- EP-A1- 0 505 019
- US-A- 465 141
- US-A- 3 205 022

## Beschreibung

Die Erfindung betrifft einen Kettenantrieb für Gliederketten von Bergbauförderern oder Bergbaugewinnungsmaschinen, insbesondere für Kettenkratzerförderer, mit einer Antriebswelle und Kettenzahnkörpern.

Kettenantriebe werden in Bergbaubetrieben vor allem bei Kettenförderern, insbesondere Kettenkratzerförderern, und für den Antrieb von Gewinnungsmaschinen, wie vor allem Kohlenhobeln und dergleichen, verwendet.

Kettenkratzerförderer sind Stetigförderer und das bevorzugte Fördermittel zur Strebförderung, insbesondere im Steinkohlenbergbau. Das Fördergut wird hierbei durch Mitnehmer (Kratzer), die an endlosen elektromotorisch angetriebenen Ketten befestigt sind, in einer Förderrinne bewegt.

Ein Kettenkratzerförderer setzt sich im Wesentlichen zusammen aus Antriebsstation, Rinnenstrang, ein-, zwei- oder dreiteiliger Kette mit Mitnehmern, Umkehrstation mit Hilfsantrieb, Rückeinrichtung und den Abspannstationen. Die Kettenkratzerförderer werden mit hochfesten Ketten betrieben. Zum Antrieb der Kettenbänder (Ketten mit Kratzern) wird das Antriebsmoment aus dem Motor über eine Welle in das auf der Welle montierte Kettenrad eingeleitet. Das Kettenrad leitet formschlüssig die Tangentialkraft in die Kette ein.

In Abhängigkeit von der am Förderer installierten Antriebsleistung und Getriebeuntersetzung muss eine Kette gewählt werden, welche die erforderliche Zugfestigkeit besitzt. Stärkere Ketten haben größere Abmessungen und eine größere Teilung. Demzufolge laufen sie auf einem größeren Teilkreis um das Kettenrad um. Es ist daher vorteilhaft, dass auf derselben Welle eines Maschinenrahmens wahlweise mehrere unterschiedliche Kettenradformen passend zur jeweiligen Kette montiert werden können.

Bei Antrieben für Bergbauförderer wird aus Platzgründen ein kleiner Kettenraddurchmesser gefordert, der sich bei Verwendung von sechs oder sieben Zähnen am Umfang eines Kettenrades ergibt. Innerhalb dieses Teilkreisdurchmessers ist nur ein begrenzter Bauraum für den Wellenquerschnitt und das Kettenrad vorhanden. Gerade die Antriebswelle wird aber durch Torsion (Antrieb) und Biegung (Kettenzugkraft) stark belastet und braucht daher einen Querschnitt, der eine ausreichend hohe Wellenfestigkeit sicherstellt. Ebenso werden die Kettenzähne eines Kettenrades durch die Kettenzugkräfte stark auf Biegung belastet. Daher muss der tragende Untergrund eine ausreichend hohe Festigkeit besitzen.

Für Kettenkratzerförderer im schweren Bergbaueinsatz, insbesondere mit Mehrkettenantrieben, wird, um die Austauschbarkeit eines verschlissenen Kettenrades zu ermöglichen, das Kettenrad als Wechselteil auf der Welle montiert. Das Kettenrad hat an seinem äußeren Umfang die für den Ketteneingriff erforderlichen formschlüssigen Konturen fest eingearbeitet. Das Kettenrad kann aus zwei Hälften bestehen, welche als Halbschalen um die Welle gelegt und verschraubt werden. Vorteilhaft hieran ist, dass die Kettenräder bei eingebauter Welle gewechselt werden können. Nachteilig ist, dass die Verschraubung der Kettenradhälften sehr starke Schrauben erfordert, die mit schwerem Werkzeug (Drehmomentverstärker) angezogen werden müssen.

Bei einer anderen bekannten Ausführungsform besteht das Kettenrad aus einem Ringkörper, welcher auf die Welle aufgezogen wird. Zur Demontage muss die ganze Welle mit Verlagerung und aufsitzendem Kettenrad aus dem Maschinenrahmen ausgebaut und ein Lager an einem Wellenende abmontiert werden. Die Kettenringe mit Innenverzahnung zur Drehmomentenaufnahme sind zudem sehr teuer.

Generell ist festzustellen, dass gerade für sehr starke Bergbauketten mit Drahtdurchmessern von bis zu 60 mm und maximalen Zugkräften von 4.500 kN bis 5.000 kN die Verschraubung der Kettenradhälften untereinander und des Kettenrades auf der Welle problematisch ist. Die notwendigen Schrauben erfordern einen großen Bauraum und daher eine Mindestbreite des Kettenrades. Die Einbringung des erforderlichen Drehmomentes ist schwer. Die Demontage und erneute Montage der Kettenräder erfordert den Ausbau der Welle und ist zeitlich aufwendig. Die notwendigen Betriebsunterbrechungen führen zu einem Förderausfall.

Bei den leistungsstarken Antrieben sind die Gliederketten außerordentlich hohen Beanspruchungen ausgesetzt. Hierdurch unterliegen die Kettenräder, insbesondere die Formschlussbauteile (Kettenzähne, Kettentaschen) des Kettenrades infolge der Reibung der Kettenglieder mit den Formschlussbauteilen einem hohen Verschleiß, der einen regelmäßigen Austausch erforderlich macht. Im Stand der Technik sind Wechselzahnlösungen bekannt. Hierbei ist das Kettenrad bzw. ein Kettenradgrundkörper mit auswechselbaren Formschlussbauteilen, insbesondere Kettenzähnen bzw. Kettenzahnkörpern, ausgerüstet.

Solche Vorschläge sind aus der EP 0 505 019 B1, der CH 456 259 A ebenso wie der DE 44 03 108 B4 bekannt. Vergleichbare Lösungen offenbaren die US 4,308,019 A sowie die US 2,038,695 A.

Allen Vorschlägen ist gemein, dass wechselbare Formschlussbauteile, in Form von Zähnen oder Zahnpaaren, allgemein Kettenzahnkörper, am Umfang des Kettenrades festgelegt werden. In diesem Zusammenhang sind unterschiedliche Ausführungsformen bekannt. Die Kettenzahnkörper können in Aufnahmen am Umfang des Kettenrades eingesetzt und verschraubt werden. Die Standfestigkeit der Zähne gegen Umkippen durch die Kettenzugkräfte wird durch Schrauben erreicht, welche die Basis des Zahns an der Oberfläche des Kettenrades anpressen. Die Schraubverbindung ist zum Zentrum des Kettenrades ausgerichtet und bildet den tiefsten Einbringpunkt in das Kettenradmaterial.

Weiterhin kann die Befestigung der Kettenzahnkörper durch Einpressen der Zähne in Taschen der Kettenradoberfläche erfolgen. Die Befestigung erfolgt mit Schrauben oder Bolzen parallel zur Wellenrichtung. Die Standfestigkeit der Zähne gegen Umkippen durch die Kettenzugkräfte wird erreicht durch Anlegen der Zahnbasis an die Oberfläche des Kettenrades. Weiterhin kann die Befestigung der Kettenzahnkörper durch seitliches Übergreifen der Kettenradscheibe erfolgen. Die Befestigung erfolgt mit Schrauben oder Bolzen parallel zur Wellenrichtung. Diese werden durch die Kettenzugkräfte im Betrieb starken Scherbelastungen unterworfen.

Zudem ist durch die US 465 141 A ein Kettentrieb für eine Gliederkette aus dem Bereich von Bergbauförderern bekannt. Die aufgezeigte Fördereinrichtung besitzt zumindest einen Kettenzahnkörper, welcher an eine Antriebswelle gekoppelt ist. Zudem sind die Kettenzahnkörper in Aufnahmen in der Antriebswelle festlegbar.

Generell ist zu sagen, dass die bekannten Wechselzahnlösungen für Einkettenantriebe leichterer Bauart verwendbar sind. Solche Lösungen konnten sich jedoch in Hochleistungsanwendungen, insbesondere bei Kettenkratzerförderern, nicht durchsetzen und sind auch technologisch nicht für solche Einsätze geeignet.

Der Erfindung liegt, ausgehend vom Stand der Technik, die Aufgabe zugrunde, einen hochleistungsfähigen und für den betrieblichen Einsatz verbesserten Kettenantrieb für Gliederketten von Bergbauförderern oder Bergbaugewinnungsmaschinen, insbesondere für Kettenkratzerförderern, zu schaffen.

Die Lösung dieser Aufgabe besteht in einem Kettenantrieb gemäß den Merkmalen von Anspruch 1.

Kernpunkt der Erfindung bildet die Maßnahme, dass die Kettenzahnkörper in Aufnahmen direkt in der Antriebswelle festgelegt sind.

Vorteilhafte Ausgestaltungen und Weiterbildungen des grundsätzlichen Erfindungsgedankens sind Gegenstand der abhängigen Ansprüche 2 bis 7.

Die Welle wird direkt zum Antrieb der Gliederkette bzw. des Kettenbandes verwendet. Das Kettenrad als zwischengeschaltetes Bauteil entfällt. Der frei gewordene Bauraum des Kettenrades wird zur Vergrößerung des Wellendurchmessers genutzt. Bei dem erfindungsgemäßen Kettenantrieb kommt folglich eine Antriebswelle mit einem im Vergleich zu herkömmlichen bekannten Konstruktionen größeren Durchmesser zum Einsatz.

Die auswechselbaren Kettenzahnkörper werden direkt bzw. unmittelbar in die Aufnahmen in der Antriebswelle eingesteckt.

Die Kettenzahnkörper weisen einen unteren Koppelabschnitt zum Eingriff in die Aufnahmen auf. Die Aufnahmen sind bevorzugt durch Nuten gebildet. Hierzu werden tiefe Nuten in die Antriebswelle eingefräst. Dies ist möglich, da erfindungsgemäß ein separates Kettenrad entfällt. Der frei gewordene Bauraum wird nun teilweise für die Ausbildung der Nuten genutzt.

Die in einer Reihe liegenden Zähne (zwei bei Einketten-, vier bei Doppelkettenbetrieb) werden zu einer Zahnleiste zusammengefasst, mit anderen Worten mehrere Kettenzahnkörper in einer Reihe bilden eine Zahnleiste. Hierdurch werden die Abstände und Positionen der Kettenzahnkörper relativ zueinander exakt eingehalten.

Die Verbindung zwischen Kettenzahnkörper bzw. Koppelabschnitt des Kettenzahnkörpers und einer Aufnahme ist form- und/oder kraftschlüssig mit einer strammen Passung. Hierdurch ist gewährleistet, dass die Kettenzahnkörper ohne zusätzliche kraftübertragende Verbindungselemente die eingeleiteten Kräfte auf die Gliederkette übertragen. Die Kettenzahnkörper werden lediglich durch Befestigungsmittel in den Aufnahmen gesichert. Die Befestigungsmittel bilden einen Verlierschutz. Dies ist sinnvoll für den Fall des Vorspannungsverlustes der Koppelabschnitte in den Aufnahmen in Folge der harten Betriebsbedingungen. Zweckmäßiger Weise sind die Kettenzahnkörper in den Aufnahmen seitlich durch kleine Schrauben gesichert. Die Schrauben dringen nicht tief in den Wellenwerkstoff ein. Der Wellenquerschnitt wird hierdurch nicht bzw. nicht maßgeblich geschwächt.

Verschlissene Kettenzahnkörper können einfach, schnell und kostengünstig demontiert und ersetzt werden. Der Austausch der wechselbaren Kettenzahnkörper erfolgt bei eingebauter Welle. Spezialwerkzeuge sind hierfür nicht erforderlich, da auf große, schwer anzuziehende Schrauben verzichtet werden kann.

Im Rahmen der Erfindung kann die Antriebswelle für Ketten mit verschiedenen Teilungen eingesetzt werden. Hierfür werden andere, auf die jeweilige Kette abgestimmte Kettenzahnkörper bzw. Zahnleisten eingesetzt. Die Zahnleisten sind bevorzugt einstückig ausgeführt.

Der Wegfall eines separaten Kettenrades macht es möglich, trotz kleinem Bauraum Aufnahmen in die Antriebswelle einzubringen. Die Aufnahmen weisen eine Tiefe auf, die den sicheren Halt mit enger Passung der Kettenzahnkörper bzw. der unteren Koppelabschnitte der Kettenzahnkörper spielfrei sicherstellen. Die Aufnahmen besitzen eine entsprechend große Tiefe. Die Kettenzahnkörper werden mit ihren Koppelabschnitten in die Aufnahmen eingesteckt. Der gegenüber dem Umfang der Antriebswelle vorstehende Teil der Kettenzahnkörper besitzt eine freie Zahnhöhe. Diese freie Zahnhöhe ist gemessen zwischen dem äußeren Umfang der Antriebswelle und der Wirkungslinie einer anzutreibenden Gliederkette.

Erfindungsgemäß ist ein Verhältnis der Tiefe einer Aufnahme zur freien Zahnhöhe zwischen 1 : 1 und 1 : 2,5 vorgesehen. Dies stellt die notwendige Standfestigkeit der Kettenzahnkörper mit ihren Koppelabschnitten in den Aufnahmen sicher, ebenso wie die zuverlässige Krafteinleitung von der Antriebswelle über die Kettenzahnkörper in die Gliederkette. In den tiefen Aufnahmen bzw. Nuten werden die Kettenzahnkörper bzw. Zahnleisten ohne zusätzliche kraftübertragende Verbindungselemente sicher aufgenommen. Kettenzugkräfte von 5.000 kN und die daraus resultierenden Biegekräfte werden sicher übertragen. Besonders bevorzugt ist das Verhältnis der Tiefe einer Aufnahme zur freien Zahnhöhe zwischen 1 : 1 und 1 : 2 bemessen.

Weitere Vorteile und vorteilhafte Ausführungsformen des erfindungsgemäßen Kettenantriebs ergeben sich aus den Patentansprüchen und den nachfolgend anhand der Zeichnung beschriebenen Ausführungsbeispiels. Es zeigen:
- Figur 1: einen vertikalen Querschnitt durch einen erfindungsgemäßen Kettenantrieb;
- Figur 2: den Kettenantrieb in einer Seitenansicht, teilweise in geschnittener Darstellungsweise und
- Figur 3: einen Ausschnitt aus den Kettenantrieb mit der Darstellung eines Kreissegments der Antriebswelle mit Kettenzahnkörper und in Eingriff stehender Gliederkette.

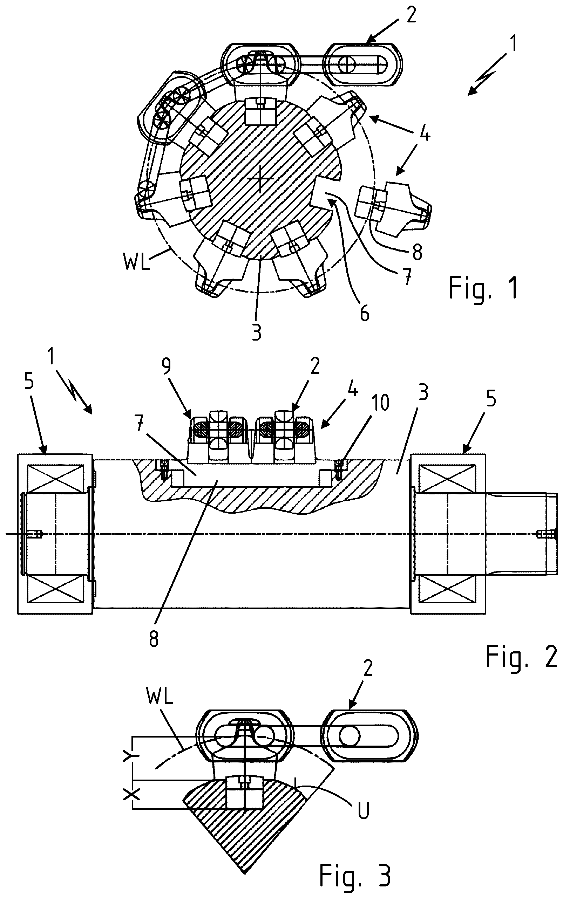

Anhand der Figuren 1 bis 3 ist ein erfindungsgemäßer Kettenantrieb 1 erläutert. Der Kettenantrieb 1 dient zum Antrieb einer Gliederkette 2 eines Kettenkratzerförderers.

Der Kettenantrieb 1 umfasst eine Antriebswelle 3 und auf den Umfang verteilt angeordnete Kettenzahnkörper 4. Die Antriebswelle 3 ist über Lager 5 in einem hier nicht dargestellten Maschinenrahmen gelagert.

Wie in der Figur 1 ersichtlich, sind in dem hier darstellten Ausführungsbeispiel insgesamt sieben Kettenzahnkörper 4 vorgesehen. Die Kettenzahnkörper 4 sind in Aufnahmen 6 in der Antriebswelle 3 festgelegt.

Die Aufnahmen 6 sind durch tiefe, in die Antriebswelle 3 eingefräste Nuten 7 gebildet. Die Kettenzahnkörper 4 weisen jeweils einen unteren Koppelabschnitt 8 zum Eingriff in eine Aufnahme 6 auf. Die Koppelabschnitte 8 bilden einen Zahnkörperfuß, mit dem der Kettenzahnkörper 4 in die Nut 7 gesteckt wird. Die Verbindung ist durch enge Passung der Nut 7 spielfrei gestaltet. Die tiefen Nuten 7 mit einer strammen Passung gewährleisten, dass die eingesetzten Kettenzahnkörper 4 ohne zusätzliche kraftübertragende Verbindungselemente die Kräfte auf die Gliederkette 2 übertragen können.

Wie die Figur 3 zeigt, weist eine Aufnahme 6 eine Tiefe X auf. In der Aufnahme 6 ist der Kettenzahnkörper 4 mit seinem Koppelabschnitt 8 eingesteckt. Der obere Teil des Kettenzahnkörpers 4 steht gegenüber dem Umfang der Antriebswelle vor. Der Kettenzahnkörper 4 besitzt eine freie Zahnhöhe Y. Die freie Zahnhöhe Y ist gemessen zwischen dem äußeren Umfang U der Antriebswelle 3 und der Wirkungslinie WL der um die Antriebswelle 3 über die Kettenzahnkörper 4 umlaufenden Gliederkette 2. Das Verhältnis der Tiefe X zur freien Zahnhöhe Y ist zwischen 1 : 1 und 1 : 2,5, vorzugsweise zwischen 1 : 1 und 1 : 2 bemessen.

Hierdurch ist ein stabiler und sicherer Halt der Kettenzahnkörper 4 in den Aufnahmen 6 sichergestellt. Die Kraftübertragung und -einleitung erfolgt von der Antriebswelle 3 über die Kettenzahnkörper 4 in die Gliederkette 2.

Die Figur 2 verdeutlicht weiterhin, dass mehrere Kettenzahnkörper 4 in einer Reihe in Längsrichtung der Antriebswelle 3 angeordnet eine Zahnleiste 9 bilden. Die Kettenzahnkörper 4 bzw. die Zahnleiste 9 ist links und rechts durch Befestigungsmittel 10 in den Aufnahmen 6 gesichert. Als Befestigungsmittel 10 kommen kleine Schrauben zur Anwendung. Die Schrauben dringen nicht tief in den Wellenwerkstoff ein, so dass der Wellenquerschnitt hierdurch nicht nachteilig geschwächt wird.

### Bezugszeichen:

- 1 -: Kettenantrieb
- 2 -: Gliederkette
- 3 -: Antriebswelle
- 4 -: Kettenzahnkörper
- 5 -: Lager
- 6 -: Aufnahmen
- 7 -: Nut
- 8 -: Koppelabschnitt
- 9 -: Zahnleiste
- 10 -: Befestigungsmittel

- X -: Tiefe v. 6
- Y -: Zahnhöhe v. 4
- U -: Umfang
- WL -: Wirkungslinie

## Patentansprüche

1. Kettenantrieb für Gliederketten von Bergbauförderern oder Bergbaugewinnungsmaschinen, insbesondere für Kettenkratzerförderer, mit einer Antriebswelle (3) und Kettenzahnkörpern (4), wobei die Kettenzahnkörper (4) in Aufnahmen (6) in der Antriebswelle (3) festgelegt sind,
**dadurch gekennzeichnet, dass** die Aufnahmen (6) eine Tiefe (X) besitzen und die Kettenzahnkörper (4) eine freie Zahnhöhe (Y) besitzen, wobei die freie Zahnhöhe (Y) gemessen ist zwischen dem äußeren Umfang (U) der Antriebswelle (3) und der Wirkungslinie (WL) einer anzutreibenden Gliederkette (2) und das Verhältnis der Tiefe (X) zur freien Zahnhöhe (Y) zwischen 1 : 1 und 1 : 2,5 bemessen ist.

2. Kettenantrieb nach Anspruch 1, **dadurch gekennzeichnet, dass** die Kettenzahnkörper (4) einen unteren Koppelabschnitt (8) zum Eingriff in die Aufnahme (6) aufweisen.

3. Kettenantrieb nach Anspruch 1 oder 2, **dadurch gekennzeichnet, dass** die Aufnahmen (6) durch Nuten (7) gebildet sind.

4. Kettenantrieb nach wenigstens einem der Ansprüche 1 bis 3,
**dadurch gekennzeichnet, dass** mehrere Kettenzahnkörper (4) in einer Reihe eine Zahnleiste (9) bilden.

5. Kettenantrieb nach Anspruch 4, **dadurch gekennzeichnet, dass** die Zahnleiste (9) einstückig ausgeführt ist.

6. Kettenantrieb nach wenigstens einem der Ansprüche 1 bis 5,
**dadurch gekennzeichnet, dass** die Kettenzahnkörper (4) durch Befestigungsmittel (10) in den Aufnahmen (6) gesichert sind.

7. Kettenantrieb nach einem der Ansprüche 1 bis 6,
**dadurch gekennzeichnet, dass** das Verhältnis der Tiefe (X) zur freien Zahnhöhe (Y) zwischen 1 : 1 und bis 1 : 2 bemessen ist.

## Claims

1. Chain drive for link chains of mining conveyors or mining extraction machines, in particular for scraper chain conveyors, with a drive shaft (3) and sprocket tooth bodies (4), wherein the sprocket tooth bodies (4) are set in mounts (6) in the drive shaft (3),
**characterised in that** the mounts (6) have a depth (X) and the sprocket tooth bodies (4) have a free tooth height (Y), wherein the free tooth height (Y) is measured between the outer circumference (U) of the drive shaft (3) and the line of action (WL) of a link chain (2) to be driven and the ratio of the depth (X) to the free tooth height (Y) is between 1:1 and 1:2.5.

2. Chain drive according to claim 1, **characterised in that** the sprocket tooth bodies (4) have a lower coupling section (8) for engaging in the mount (6).

3. Chain drive according to claim 1 or 2, **characterised in that** the mounts (6) are formed by grooves (7).

4. Chain drive according to at least one of claims 1 to 3, **characterised in** several sprocket tooth bodies (4) in a row form a rack (9).

5. Chain drive according to claim 4, **characterised in that** the rack (9) is produced in one piece.

6. Chain drive according to at least one of claims 1 to 5, **characterised in that** the sprocket tooth bodies (4) are secured in the mounts (6) by fasteners (10).

7. Chain drive according to any of claims 1 to 6, **characterised in that** the ratio of the depth (X) to the free tooth height (Y) is between 1:1 and 1:2.

## Revendications

1. Entraînement de chaîne pour chaînes à maillons de convoyeurs ou d'engins d'exploitation minière, notamment pour transporteur blindé à chaîne à raclettes, avec un arbre d'entraînement (3) et un corps à dents de chaînes (4), dans lequel le corps à dents de chaînes (4) est fixé dans des logements (6) dans l'arbre d'entraînement (3),
**caractérisé en ce que**, les logements (6) possèdent une profondeur (X) et le corps à dents de chaînes (4) possède une hauteur de dents (Y), dans lequel la hauteur de dents libre (Y) est mesurée entre le pourtour extérieur (U) de l'arbre d'entraînement (3) et la ligne d'action (WL) d'une chaîne à maillons à entraîner mécaniquement (2) et le rapport entre la profondeur (X) et la hauteur de dents libre (Y) étant mesuré entre 1:1 et 1:2,5.

2. Entraînement de chaîne selon la revendication 1, **caractérisé en ce que** le corps à dents de chaînes (4) présente une section de couplage inférieure (8) destinée à s'engager dans le logement (6).

3. Entraînement de chaîne selon la revendication 1 ou 2, **caractérisé en ce que** les logements (6) sont formés par des rainures (7).

4. Entraînement de chaîne selon l'une quelconque des revendications 1 à 3,
**caractérisé en ce que** plusieurs corps à dents de chaînes (4) constituent, dans une rangée, une crémaillère (9).

5. Entraînement de chaîne selon la revendication 4, **caractérisé en ce que** la crémaillère (9) est réalisée en un seul morceau.

6. Entraînement de chaîne selon l'une quelconque des revendications 1 à 5,
**caractérisé en ce que** les corps à dents de chaînes (4) sont sécurisés au moyen d'éléments de fixation (10) dans les logements (6).

7. Entraînement de chaîne selon l'une quelconque des revendications 1 à 6,
**caractérisé en ce que** le rapport entre la profondeur (X) et la hauteur de dents libre (Y) est mesuré entre 1:1 et 1:2.
